# EUROPÄISCHE PATENTANMELDUNG

(11) **EP 4 620 735 A1**
(43) Veröffentlichungstag der Anmeldung: **24.09.2025**
(21) Anmeldenummer: 24164612.4
(22) Anmeldetag: 19.03.2024
(51) Int. Cl.: B60Q 1/00, B60Q 1/05, B60Q 1/26

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Kern, Matthias, 3385 Prinzersdorf (AT); Maier, Andreas, 3382 Dunkelsteinerwald (AT); Reiter, David, 3250 Wieselburg (AT); Poschenreither, Rene, 3244 Ruprechtshofen (AT)
(74) Vertreter: Patentanwaltskanzlei Matschnig & Forsthuber OG

(57) **Zusammenfassung**

Beleuchtungsvorrichtung (10) für einen Kraftfahrzeugscheinwerfer, umfassend:
- zumindest ein Lichtmodul (20), ein bewegliches unteres Blendenelement (100) und ein bewegliches oberes Blendenelement (200), sowie eine Bewegungseinrichtung zum Überführen des unteren und des oberen Blendenelements (100, 200) in Bezug zueinander zwischen einer geschlossenen Position (P1) und einer geöffneten Position (P2) unter Beibehaltung der räumlichen Ausrichtung des oberen und unteren Blendenelements (100, 200),
- einen Rahmen (300), wobei die Bewegungseinrichtung an dem Rahmen (300) angeordnet ist, wobei die Beleuchtungsvorrichtung (10) zumindest eine Ausrichtungseinrichtung (400) zum Ausrichten des unteren und oberen Blendenelements (100, 200) zueinander in der geschlossenen Position (P1) umfasst, wobei die zumindest eine Ausrichtungseinrichtung (400) ein Ausrichteelement (400a) und ein Führungselement (400b) umfasst,
wobei das Ausrichteelement (400a) eingerichtet ist, beim Überführen des unteren und oberen Blendenelements (100, 200) von der offenen Position (P2) in die geschlossene Position (P1) in das Führungselement (400b) einzugreifen, sodass das Ausrichteelement (400a) von dem Führungselement (400b) in eine Endposition in dem Führungselement (400b) führbar ist, wobei das Ausrichteelement (400a) in der geschlossenen Position (P1) des unteren und oberen Blendenelements (100, 200) in der Endposition im Führungselement (400b) formschlüssig mit dem Führungselement (400b) verbunden ist, sodass das obere und untere Blendenelement (100, 200) in der geschlossenen Position (P1) gegen ein Bewegen entlang der und quer zur Hauptrichtung (X) gesichert ist.

## Beschreibung

Die Erfindung betrifft eine Beleuchtungsvorrichtung für einen Kraftfahrzeugscheinwerfer, wobei die Beleuchtungsvorrichtung umfasst:
- zumindest ein Lichtmodul, welches eingerichtet ist, Licht entlang eines Lichtpfades in Richtung einer Hauptrichtung auszustrahlen,
- ein bewegliches unteres Blendenelement und ein bewegliches oberes Blendenelement,
- eine Bewegungseinrichtung zum Überführen des unteren und des oberen Blendenelements in Bezug zueinander zwischen
   - einer geschlossenen Position, in der das untere und das obere Blendenelement - gesehen in der Hauptrichtung - vor dem zumindest einen Lichtmodul positioniert sind und den Lichtpfad des zumindest einen Lichtmoduls zumindest teilweise blockieren, und
   - einer geöffneten Position, in der das untere und das obere Blendenelement von dem Lichtpfad des zumindest einen Lichtmoduls wegbewegt werden, um den Lichtpfad des zumindest einen Lichtmoduls freizugeben,
      unter Beibehaltung der räumlichen Ausrichtung des oberen und unteren Blendenelements,
- einen Rahmen, der in Bezug auf die Bewegung des unteren und oberen Blendenelements stationär ist, wobei die Bewegungseinrichtung an dem Rahmen angeordnet ist.

Weiters betrifft die Erfindung einen Kraftfahrzeugscheinwerfer mit zumindest einer erfindungsgemäßen Beleuchtungsvorrichtung.

Im Stand der Technik gibt es Beleuchtungsvorrichtungen mit einem oberen und unteren Blendenelement, welche zwischen einer offenen und einer geschlossenen Position überführbar sind. Dies erfordert allerdings komplizierte Mechaniken, wobei unter anderem sichergestellt sein muss, dass die Blendenelemente in der geschlossenen Position tatsächlich geschlossen sind. Es kann allerdings durch den Fahrbetrieb aufgrund von auftretenden Vibrationen und Temperaturunterschieden im Kraftfahrzeugscheinwerfer dazu führen, dass die Position des unteren und oberen Blendenelements in der geschlossenen Position zueinander variiert und sich verschiebt. Weiters können das obere und untere Blendenelement Designelemente umfassen, die aufeinander abgestimmt sind, sodass in der geschlossenen Position die Position der Blendenelemente zueinander gewährleistet sein muss. Beispielsweise können solche Designelemente vertikale Striche sein, die auf dem oberen Blendenelement beginnen und sich im unteren Blendenelement fortsetzen. Ein Verschieben bzw. Verziehen der Blendenelemente zueinander würde dazu führen, dass der beabsichtigte vertikale Strich nicht mehr als solcher erkennbar ist.

Es ist daher eine Aufgabe der Erfindung eine verbesserte Beleuchtungsvorrichtung bereitzustellen.

Diese Aufgabe wird dadurch gelöst, dass die Beleuchtungsvorrichtung zumindest eine Ausrichtungseinrichtung zum Ausrichten des unteren und oberen Blendenelements zueinander in der geschlossenen Position umfasst, wobei die zumindest eine Ausrichtungseinrichtung
- ein Ausrichteelement, und
- ein zum Ausrichteelement komplementäres Führungselement umfasst,
wobei das Ausrichteelement eingerichtet ist, beim Überführen des unteren und oberen Blendenelements von der offenen Position in die geschlossene Position in das Führungselement einzugreifen, sodass das Ausrichteelement von dem Führungselement in eine Endposition in dem Führungselement führbar ist, wobei das Ausrichteelement in der geschlossenen Position des unteren und oberen Blendenelements in der Endposition im Führungselement formschlüssig mit dem Führungselement verbunden ist, sodass das obere und untere Blendenelement in der geschlossenen Position gegen ein Bewegen entlang der und quer zur Hauptrichtung gesichert ist.

Unter "quer zur Hauptrichtung" ist auch ein nach oben und unten zur Hauptrichtung umfasst. Generell beziehen sich Angaben wie "oben", "unten", "links", "rechts", "seitlich" usw. auf eine Beleuchtungsvorrichtung in einem Kraftfahrzeugscheinwerfer in einem korrekt installierten Zustand des Kraftfahrzeugscheinwerfers in einem Kraftfahrzeug.

Es kann vorgesehen sein, dass das obere und das untere Blendenelement als Leuchtelemente ausgebildet sind, welche eingerichtet sind, in der geschlossenen Position Licht zu emittieren, vorzugsweise in Richtung der Hauptabstrahlrichtung, und wobei vorzugsweise die als Leuchtelemente ausgebildeten Blendenelemente in der offenen Position kein Licht emittieren.

Es kann vorgesehen sein, dass das Ausrichteelement im Wesentlichen konisch ausgebildet ist, wobei das Führungselement derart komplementär zum Ausrichteelement ausgebildet ist, dass das konisch ausgebildete Ausrichteelement in der Endposition im Führungselement formschlüssig gelagert ist.

Es kann vorgesehen sein, dass die Beleuchtungsvorrichtung zumindest zwei Ausrichtungseinrichtungen umfasst.

Es kann vorgesehen sein, dass das Ausrichteelement auf dem oberen Blendenelement und das Führungselement auf dem unteren Blendenelement angeordnet ist, oder das Ausrichteelement auf dem unteren Blendenelement und das Führungselement auf dem oberen Blendenelement angeordnet ist.

Es kann vorgesehen sein, dass das Ausrichteelement elastisch ausgebildet ist, wobei vorzugsweise das Ausrichteelement aus einem Kunststoff, vorzugsweise PP-GF30 (Polypropylen mit 30 % Glasfaser), gebildet ist, welches mit einem elastischen Material, vorzugsweise TPE (Thermoplastische Elastomere), umspritzt ist.

Es kann vorgesehen sein, dass die Beleuchtungsvorrichtung eine Dämpfungseinrichtung umfasst, welche eingerichtet ist, das untere und das obere Blendenelement beim Überführen in die offene Position abzudämpfen, wobei die Dämpfungseinrichtung zumindest zwei Paare eines elastischen Dämpfungselements und eines zu dem Dämpfungselement korrespondierenden Anschlags umfasst, wobei dem unteren und oberen Blendenelement jeweils zumindest ein Paar zugeordnet ist, und wobei beim Überführen der Blendenelemente in die offene Position die Dämpfungselemente an den korrespondierenden Anschlägen derart anschlagen, dass eine Stauchung der Dämpfungselemente das Überführen der unteren und oberen Blendenelemente in die offene Position abdämpft.

Es kann vorgesehen sein, dass die Dämpfungselemente der Paare an dem unteren und oberen Blendenelement angeordnet und die Anschläge an dem Rahmen angeordnet sind, oder die Dämpfungselemente an dem Rahmen und die Anschläge an dem oberen und unteren Blendenelement angeordnet sind.

Es kann vorgesehen sein, dass die Dämpfungselemente aus EPDM (Ethylen-Propylen-Dien; M-Gruppe (Synthesekautschuk)) gebildet sind.

Es kann vorgesehen sein, dass die Dämpfungselemente in Form einer Halbkugel geformt sind.

Die Aufgabe wird ebenso gelöst durch einen Kraftfahrzeugscheinwerfer umfassend zumindest eine Beleuchtungsvorrichtung.

### Kurzbeschreibung der Figuren

Nachfolgend wird die Erfindung anhand von beispielhaften Zeichnungen näher erläutert. Hierbei zeigt
- Fig. 1: eine Frontansicht eines beispielhaften Kraftfahrzeugscheinwerfers mit einer beispielhaften Beleuchtungsvorrichtung umfassend ein oberes und unteres Blendenelement in einer geschlossenen Position,
- Fig. 2: eine Frontansicht des Kraftfahrzeugscheinwerfers aus Fig. 1 mit dem oberen und unteren Blendenelement in einer offenen Position, wobei in der offenen Position zwei Lichtmodule zur Abstrahlung von Licht freigegeben sind,
- Fig. 3: eine perspektivische Querschnittsansicht des oberen und unteren Blendenelements in der geschlossenen Position, wobei die Beleuchtungsvorrichtung eine Ausrichtungseinrichtung mit einem Ausrichteelement und einem dazu korrespondierenden Führungselement umfasst, wobei in der dargestellten geschlossenen Position das Ausrichteelement in das Führungselement eingreift,
- Fig. 4: eine Detailansicht der Ausrichtungseinrichtung aus Fig. 3 in der geschlossenen Position des unteren und oberen Blendenelements,
- Fig. 5: eine perspektivische Einzelansicht eines beispielhaften Ausrichteelements in konischer Form,
- Fig. 6: eine perspektivische Einzelansicht eines beispielhaften Dämpfungselements,
- Fig. 7: eine perspektivische Ansicht eines Teils des unteren Blendenelements mit einem Führungselement der Ausrichtungseinrichtung,
- Fig. 8: eine perspektivische Seitenansicht der Beleuchtungseinrichtung, wobei das untere und obere Blendenelement in einer offenen Position sind, wobei in einem strichlierten Kreis eine beispielhafte Dämpfungseinrichtung dargestellt ist, welche zumindest ein Paar umfassend ein Dämpfungselement (wie in Fig. 6 gezeigt) und einen dazu korrespondierenden Anschlag umfasst,
- Fig. 9: eine Detailansicht eines Paares der Dämpfungseinrichtung in der offenen Position des unteren und oberen Blendenelements, wobei das Dämpfungselement an dem Anschlag gestaucht ist, und
- Fig. 10: eine Explosionsansicht des Paares der Dämpfungseinrichtung aus Fig. 9.

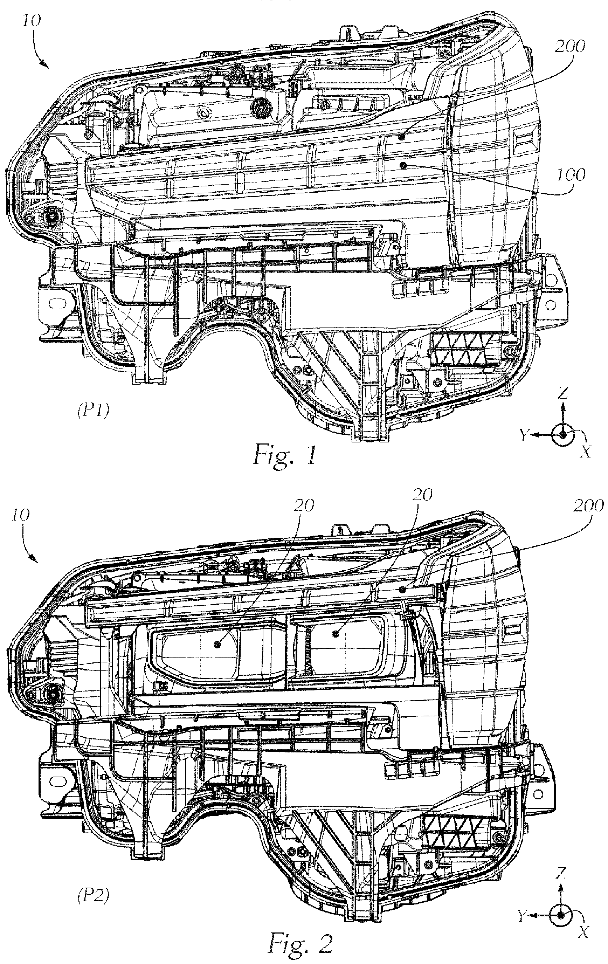

**Fig. 1** zeigt eine Beleuchtungsvorrichtung **10** für einen Kraftfahrzeugscheinwerfer, wobei die Beleuchtungsvorrichtung **10** im gezeigten Beispiel zwei Lichtmodule **20** umfasst, welche jeweils eingerichtet sind, Licht entlang eines Lichtpfades in Richtung einer Hauptrichtung **X** auszustrahlen, wobei die Lichtmodule **20** in **Fig. 2** zu sehen sind.

Weiters umfasst die Beleuchtungsvorrichtung **10** ein bewegliches unteres Blendenelement **100** und ein bewegliches oberes Blendenelement **200,** wobei zusätzlich die Beleuchtungsvorrichtung **10** eine Bewegungseinrichtung umfasst zum Überführen des unteren und des oberen Blendenelements **100, 200** in Bezug zueinander zwischen
- einer geschlossenen Position **P1,** in der das untere und das obere Blendenelement **100, 200-**gesehen in der Hauptrichtung **X -** vor den zwei Lichtmodulen **20** positioniert sind und den Lichtpfad der zwei Lichtmodule **20** zumindest teilweise blockieren, und
- einer geöffneten Position **P2,** in der das untere und das obere Blendenelement **100, 200** von dem Lichtpfad der zwei Lichtmodule wegbewegt werden, um den Lichtpfad der zwei Lichtmodule **20** freizugeben,
unter Beibehaltung der räumlichen Ausrichtung des oberen und unteren Blendenelements **100, 200.**

Das obere und das untere Blendenelement **100, 200** sind als Leuchtelemente ausgebildet, welche eingerichtet sind, in der geschlossenen Position **P1** Licht zu emittieren, vorzugsweise in Richtung der Hauptabstrahlrichtung **X,** und wobei vorzugsweise die als Leuchtelemente ausgebildeten Blendenelemente **100, 200** in der offenen Position **P2** kein Licht emittieren.

Weiters umfasst die Beleuchtungsvorrichtung **10** einen Rahmen **300,** der in Bezug auf die Bewegung des unteren und oberen Blendenelements **100, 200** stationär ist, wobei die Bewegungseinrichtung an dem Rahmen **300** angeordnet ist.

Die Beleuchtungsvorrichtung **10** umfasst weiters Ausrichtungseinrichtungen **400** zum Ausrichten des unteren und oberen Blendenelements **100, 200** zueinander in der geschlossenen Position **P1,** wobei jeweils eine Ausrichtungseinrichtung **400** ein Ausrichteelement **400a** und ein zum Ausrichteelement **400a** komplementäres Führungselement **400b** umfasst. Im gezeigten Beispiel ist das Ausrichteelement **400a** auf dem oberen Blendenelement **200** und das Führungselement **400b** auf dem unteren Blendenelement **100** angeordnet. Das Ausrichteelement 400a ist jeweils elastisch ausgebildet, wobei die Ausrichteelemente **400a** aus einem Kunststoff, vorzugsweise PP-GF30 (Polypropylen mit 30 % Glasfaser), gebildet sind, welcher mit einem elastischen Material, vorzugsweise TPE (Thermoplastische Elastomere), umspritzt ist.

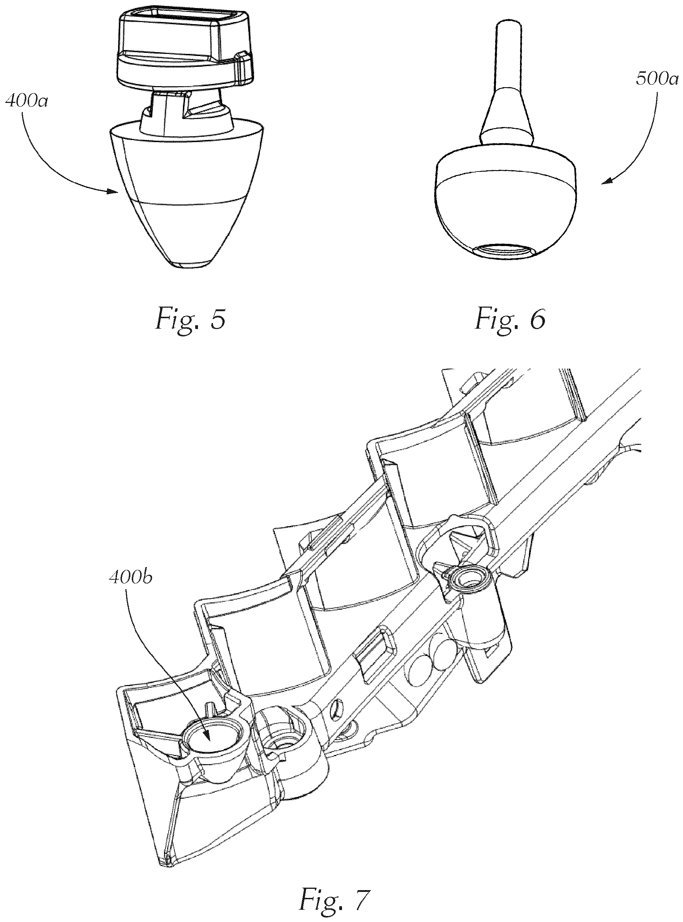

Ein Ausrichteelement **400a** einer Ausrichtungseinrichtung **400** ist in **Fig. 5** zu sehen, wobei ein Führungselement **400b** einer Ausrichtungseinrichtung **400** in **Fig. 7** zu sehen ist.

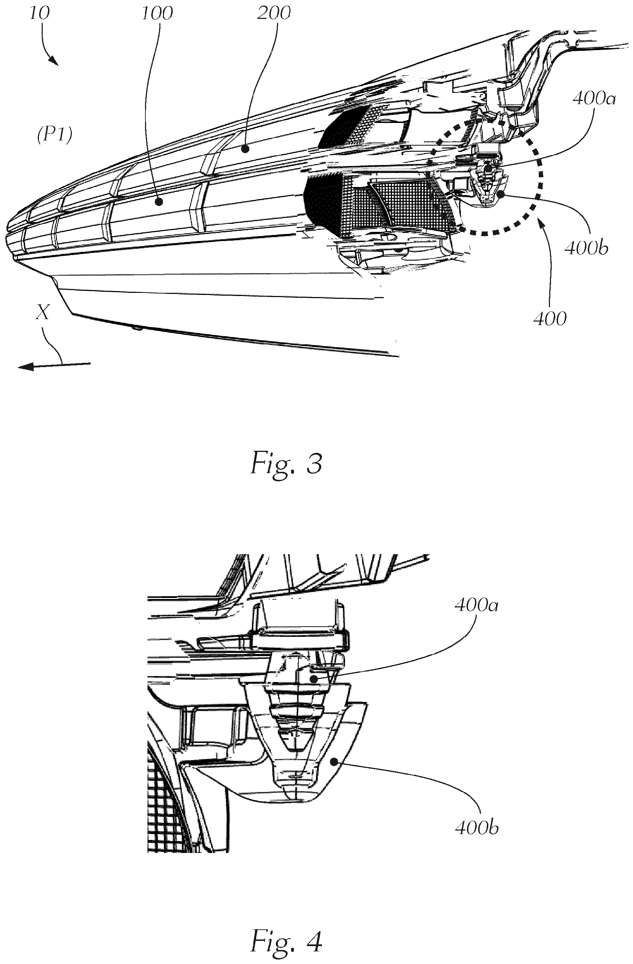

Wie in **Fig. 5** zu sehen ist, ist das Ausrichteelement **400a** im Wesentlichen konisch ausgebildet, wobei das Führungselement **400b** derart komplementär zum Ausrichteelement **400a** ausgebildet ist, dass das konisch ausgebildete Ausrichteelement **400a** in der Endposition im Führungselement **400b** formschlüssig gelagert ist, was in **Fig. 4** dargestellt ist.

Das Ausrichteelement **400a** ist eingerichtet, beim Überführen des unteren und oberen Blendenelements **100, 200** von der offenen Position **P2** in die geschlossene Position **P1** in das Führungselement **400b** einzugreifen, sodass das Ausrichteelement **400a** von dem Führungselement **400b** in eine Endposition in dem Führungselement **400b** führbar ist.

In der geschlossenen Position **P1** des unteren und oberen Blendenelements **100, 200** ist das Ausrichteelement **400a** in der Endposition im Führungselement **400b** formschlüssig mit dem Führungselement **400b** verbunden, sodass das obere und untere Blendenelement **100, 200** in der geschlossenen Position **P1** gegen ein Bewegen entlang der und quer zur Hauptrichtung **X** gesichert ist. Dies ist beispielsweise in **Fig. 3** gut zu erkennen.

Ferner umfasst die Beleuchtungsvorrichtung **10** eine Dämpfungseinrichtung **500,** welche eingerichtet ist, das untere und das obere Blendenelement **100, 200** beim Überführen in die offene Position **P2** abzudämpfen, wie dies beispielhaft in **Fig**. **8** dargestellt ist. Die Dämpfungseinrichtung **500** umfasst mehrere Paare eines elastischen Dämpfungselements **500a,** das in **Fig. 6** gezeigt ist, und eines zu dem Dämpfungselement **500a** korrespondierenden Anschlags **500b.** Wie in **Fig.** 6 zu sehen, sind die Dämpfungselemente **500a** in Form einer Halbkugel geformt.

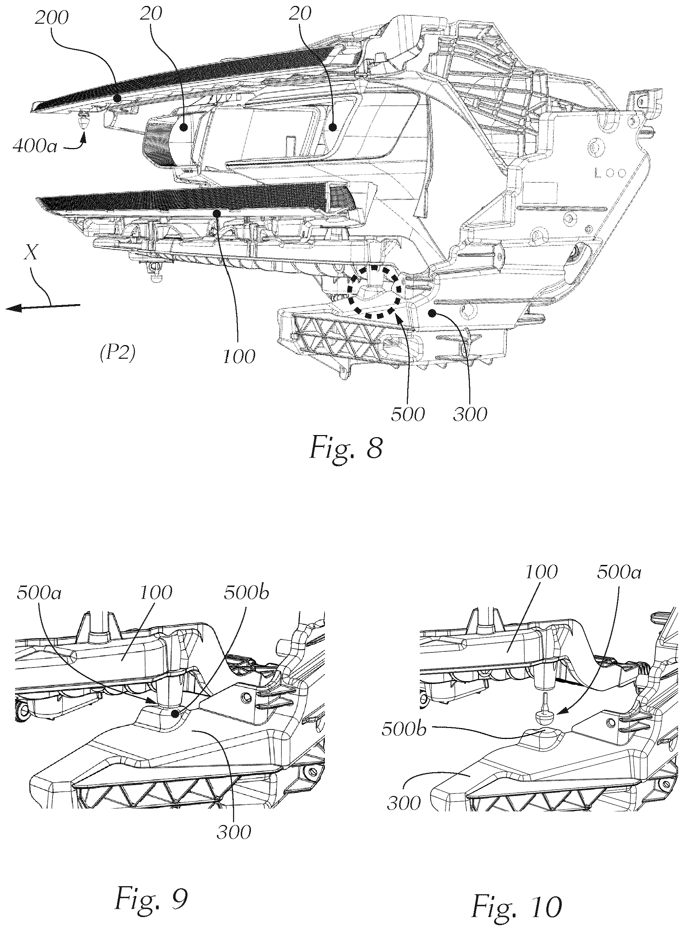

Dem unteren und oberen Blendenelement **100, 200** ist jeweils zumindest ein Paar zugeordnet, wobei beim Überführen der Blendenelemente **100, 200** in die offene Position **P2** die Dämpfungselemente **500a** an den korrespondierenden Anschlägen **500b** derart anschlagen, dass eine Stauchung der Dämpfungselemente **500a** das Überführen der unteren und oberen Blendenelemente **100, 200** in die offene Position abdämpft. **Fig. 10** zeigt ein Paar der Dämpfungseinrichtung **500** in einer Explosionsdarstellung, wohingegen **Fig. 9** das Paar in der offenen Position der Blendenelemente **100, 200** darstellt.

Die Dämpfungselemente **500a** der Paare sind dabei an dem unteren und oberen Blendenelement **100, 200** und die Anschläge an dem Rahmen **300** angeordnet. Die Dämpfungselemente **500a** sind im gezeigten Beispiel aus EPDM (Ethylen-Propylen-Dien; M-Gruppe (Synthesekautschuk)) gebildet.

**LISTE DER BEZUGSZEICHEN**

| | |
|---|---|
| Beleuchtungsvorrichtung | 10 |
| Lichtmodul | 20 |
| Unteres Blendenelement | 100 |
| Oberes Blendenelement | 200 |
| Rahmen | 300 |
| Ausrichtungseinrichtung | 400 |
| Ausrichteelement | 400a |
| Führungselement | 400b |
| Dämpfungseinrichtung | 500 |
| Dämpfungselement | 500a |
| Anschlag | 500b |
| Geschlossene Position | P1 |
| Offene Position | P2 |
| Hauptabstrahlrichtung | X |

## Patentansprüche

1. **Beleuchtungsvorrichtung** (10) für einen Kraftfahrzeugscheinwerfer, wobei die Beleuchtungsvorrichtung (10) umfasst:
- zumindest ein Lichtmodul (20), welches eingerichtet ist, Licht entlang eines Lichtpfades in Richtung einer Hauptrichtung (X) auszustrahlen,
- ein bewegliches unteres Blendenelement (100) und ein bewegliches oberes Blendenelement (200),
- eine Bewegungseinrichtung zum Überführen des unteren und des oberen Blendenelements (100, 200) in Bezug zueinander zwischen
- einer geschlossenen Position (P1), in der das untere und das obere Blendenelement (100, 200) - gesehen in der Hauptrichtung (X) - vor dem zumindest einen Lichtmodul (20) positioniert sind und den Lichtpfad des zumindest einen Lichtmoduls (20) zumindest teilweise blockieren, und
- einer geöffneten Position (P2), in der das untere und das obere Blendenelement (100, 200) von dem Lichtpfad des zumindest einen Lichtmoduls wegbewegt werden, um den Lichtpfad des zumindest einen Lichtmoduls (20) freizugeben,
unter Beibehaltung der räumlichen Ausrichtung des oberen und unteren Blendenelements (100, 200),
- einen Rahmen (300), der in Bezug auf die Bewegung des unteren und oberen Blendenelements (100, 200) stationär ist, wobei die Bewegungseinrichtung an dem Rahmen (300) angeordnet ist,
**dadurch gekennzeichnet, dass**
die Beleuchtungsvorrichtung (10) zumindest eine Ausrichtungseinrichtung (400) zum Ausrichten des unteren und oberen Blendenelements (100, 200) zueinander in der geschlossenen Position (P1) umfasst, wobei die zumindest eine Ausrichtungseinrichtung (400)
- ein Ausrichteelement (400a), und
- ein zum Ausrichteelement (400a) komplementäres Führungselement (400b) umfasst,
wobei das Ausrichteelement (400a) eingerichtet ist, beim Überführen des unteren und oberen Blendenelements (100, 200) von der offenen Position (P2) in die geschlossene Position (P1) in das Führungselement (400b) einzugreifen, sodass das Ausrichteelement (400a) von dem Führungselement (400b) in eine Endposition in dem Führungselement (400b) führbar ist, wobei das Ausrichteelement (400a) in der geschlossenen Position (P1) des unteren und oberen Blendenelements (100, 200) in der Endposition im Führungselement (400b) formschlüssig mit dem Führungselement (400b) verbunden ist, sodass das obere und untere Blendenelement (100, 200) in der geschlossenen Position (P1) gegen ein Bewegen entlang der und quer zur Hauptrichtung (X) gesichert ist.

2. Beleuchtungsvorrichtung nach Anspruch 1, **wobei** das obere und das untere Blendenelement (100, 200) als Leuchtelemente ausgebildet sind, welche eingerichtet sind, in der geschlossenen Position (P1) Licht zu emittieren, vorzugsweise in Richtung der Hauptabstrahlrichtung (X), und wobei vorzugsweise die als Leuchtelemente ausgebildeten Blendenelemente (100, 200) in der offenen Position (P2) kein Licht emittieren.

3. Beleuchtungsvorrichtung nach einem der vorhergehenden Ansprüche, **wobei** das Ausrichteelement (400a) im Wesentlichen konisch ausgebildet ist, wobei das Führungselement (400b) derart komplementär zum Ausrichteelement (400a) ausgebildet ist, dass das konisch ausgebildete Ausrichteelement (400a) in der Endposition im Führungselement (400b) formschlüssig gelagert ist.

4. Beleuchtungsvorrichtung nach einem der vorhergehenden Ansprüche, **wobei** die Beleuchtungsvorrichtung (10) zumindest zwei Ausrichtungseinrichtungen (400) umfasst.

5. Beleuchtungsvorrichtung nach einem der vorhergehenden Ansprüche, **wobei** das Ausrichteelement (400a) auf dem oberen Blendenelement (200) und das Führungselement (400b) auf dem unteren Blendenelement (100) angeordnet ist, oder das Ausrichteelement (400a) auf dem unteren Blendenelement (100) und das Führungselement (400b) auf dem oberen Blendenelement (200) angeordnet ist.

6. Beleuchtungsvorrichtung nach einem der vorhergehenden Ansprüche, **wobei** das Ausrichteelement (400a) elastisch ausgebildet ist, wobei vorzugsweise das Ausrichteelement (400a) aus einem Kunststoff, vorzugsweise PP-GF30, gebildet ist, welches mit einem elastischen Material, vorzugsweise TPE, umspritzt ist.

7. Beleuchtungsvorrichtung nach einem der vorhergehenden Ansprüche, **wobei** die Beleuchtungsvorrichtung (10) eine Dämpfungseinrichtung (500) umfasst, welche eingerichtet ist, das untere und das obere Blendenelement (100, 200) beim Überführen in die offene Position (P2) abzudämpfen, wobei die Dämpfungseinrichtung (500) zumindest zwei Paare eines elastischen Dämpfungselements (500a) und eines zu dem Dämpfungselement (500a) korrespondierenden Anschlags (500b) umfasst, wobei dem unteren und oberen Blendenelement (100, 200) jeweils zumindest ein Paar zugeordnet ist, und wobei beim Überführen der Blendenelemente (100, 200) in die offene Position (P2) die Dämpfungselemente (500a) an den korrespondierenden Anschlägen (500b) derart anschlagen, dass eine Stauchung der Dämpfungselemente (500a) das Überführen der unteren und oberen Blendenelemente (100, 200) in die offene Position abdämpft.

8. Beleuchtungsvorrichtung nach Anspruch 7, **wobei** die Dämpfungselemente (500a) der Paare an dem unteren und oberen Blendenelement (100, 200) angeordnet und die Anschläge an dem Rahmen (300) angeordnet sind, oder die Dämpfungselemente (500a) an dem Rahmen (300) und die Anschläge (500b) an dem oberen und unteren Blendenelement (100, 200) angeordnet sind.

9. Beleuchtungsvorrichtung nach Anspruch 7 oder 8, **wobei** die Dämpfungselemente (500a) aus EPDM gebildet sind.

10. Beleuchtungsvorrichtung nach einem der Ansprüche 7 bis 9, **wobei** die Dämpfungselemente (500a) in Form einer Halbkugel geformt sind.

11. **Kraftfahrzeugscheinwerfer** umfassend zumindest eine Beleuchtungsvorrichtung (10) nach einem der vorhergehenden Ansprüche.
